# EUROPEAN PATENT SPECIFICATION

(11) **EP 2 960 832 B1**
(45) Date of publication and mention of the grant of the patent: **30.11.2016**
(21) Application number: 15173305.2
(22) Date of filing: 23.06.2015
(51) Int. Cl.: G06K 19/07

(54) **MONITORING SEED CONDITION USING WIRELESS TECHNOLOGY**
ÜBERWACHUNG DES SAMENZUSTANDS MITTELS DRAHTLOSTECHNOLOGIE
SURVEILLANDE DE L'ÉTAT DE GRAINES UTILISANT UNE TECHNOLOGIE SANS FIL

(30) Priority: 26.06.2014 US 201462017290 P
(43) Date of publication of application: 30.12.2015
(73) Proprietor: Agco Corporation, Duluth, Georgia 30096 (US)
(72) Inventor: Kapoor, Vijay, Duluth, GA 30096 (US); Buhler, Timothy Dan, Duluth, GA 30096 (US); Coleman, Chris, Duluth, GA 30096 (US)
(74) Representative: AGCO Intellectual Property Department

(56) References cited:
- WO-A1-2005/111919
- RUIZ-ALTISENT M ET AL: "Sensors for product characterization and quality of specialty crops-A review", COMPUTERS AND ELECTRONICS IN AGRICULTURE, ELSEVIER, AMSTERDAM, NL, vol. 74, no. 2, 1 November 2010 (2010-11-01), pages 176-194, XP027445653, ISSN: 0168-1699, DOI: 10.1016/J.COMPAG.2010.07.002 [retrieved on 2010-10-26]

## Description

### TECHNICAL FIELD

The present disclosure is generally related to farming, and in particular, crop yield planning.

### BACKGROUND

Farm technology has advanced tremendously over the years, with satellite-guided harvesting, robust pest control, and optimized growth chemicals that individually, and collectively, lead to improved yields. On the other hand, some time-tested methods for optimizing yields persist today. For instance, seed monitoring techniques generally involve manually collecting seed samples and transporting the samples to a laboratory for analysis. Though such a process consumes time and resources, its inherent reliability motivates its pervasive use in the agricultural industry.

A system for data collection for use in agriculture is described in International patent application WO2005/111919A. Sensor devices are associated with particular cultivation areas or individual plants and have respective radio frequency identification devices configured to activate the sensor to collect at least one condition in response to receipt of RF waves from a reader device. Further techniques for non-invasive inspection of crops are described in "Sensors for product characterization and quality of specialty crops - A review" by M. Ruiz-Altisent et al, Computers and Electronics in Agriculture, Elsevier, Amsterdam NL, vol.74, no.2, 1st November 2010, pp.176-194.

The present invention provides a system for monitoring seed condition using wireless technology as recited in the claims appended hereto.

### BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views.
FIGS. 1-2 are schematic diagrams that illustrate an example environment in which an embodiment of an example wireless seed monitoring system may be implemented.
FIG. 3 is a schematic diagram that illustrates an embodiment of an example wireless seed monitoring system.
FIG. 4 is a flow diagram of an embodiment of an example wireless seed monitoring method.

### DESCRIPTION OF EXAMPLE EMBODIMENTS

### Overview

In one embodiment, a method, comprising directly sensing a condition of a seed entirely buried in soil; changing a first characteristic of a sensing component responsive to the condition of the seed; and responsive to receiving a momentary external excitation, providing by the sensing component a first electromagnetic signal wirelessly to a second device based on the changed first characteristic, the first electromagnetic signal providing an indication of the condition of the seed.

### Detailed Description

Certain embodiments of a wireless seed monitoring system and method are disclosed that include a mobile interrogating device and a sensing component that cooperate to provide a farmer, or other personnel, information about the condition of germinating seeds. In one embodiment, the interrogating device is secured to a vehicle that is moving along a field, beneath the surface of which includes a plurality of seeds. All or a portion of the seeds are wholly or partly coated by (e.g., adhered to using an adhesive or paste, integrated with, etc.) the sensing component, which in one embodiment comprises a radio frequency identification (RFID) tag and a sensor. A change in condition of the
seed, such as a change in hydration, pH, or pressure, causes a change in a characteristic or parameter of the sensor, such as a capacitance, inductance, resistivity, magnetic moment, etc. For instance, the sensor may comprise a membrane that physically deforms in the presence of pressure to which the seed is subjected. The change in characteristic may be manifested as a change in electrical and/or magnetic characteristics of the sensor. The change in electrical and/or magnetic characteristics of the sensor causes a change in circuitry of the tag (e.g., either a change in data in memory of the tag or a change in impedance). The interrogating device transmits a signal (e.g., radio frequency, RF) according to a first parameter value (e.g., frequency) to momentarily excite the tag. In one embodiment, the tag responds with a signal (e.g., reflected signal) according to a second parameter value (e.g., different frequency) based on the changed impedance, which is received at the interrogating device. The signal received by the interrogating device comprises information about the condition of the seed, which may be communicated to a computing device for use in optimizing the yield. For instance, the information may be used to further condition the soil (e.g., provide more moisture, change the amount or type of fertilizer, etc.).

In contrast, conventional techniques sample seeds from the soil for analysis in a laboratory. As noted in the background, such a process consumes time and resources. Further, depending on the sample size, the analyzed seeds may not reflect a condition of the seeds in all areas of a given field or fields. Certain embodiments of wireless seed monitoring systems may reduce the time in monitoring seed conditions while providing a more thorough sampling of the seeds. By monitoring the seed as opposed to the soil, the farmer benefits by knowing the seed's health state through the germinating and growing cycle. For example, seed infestation may be detected - which may not be possible by monitoring soil conditions. Also unforeseen soil chemistry may affect seed health. By monitoring seed conditions, the farmer (and seed manufacturer) are provided with early and direct information on seed health and resulting crop yield.

Having summarized certain features of wireless seed monitoring systems of the present disclosure, reference will now be made in detail to the description of the disclosure as illustrated in the drawings. While the disclosure will be described in connection with these drawings, there is no intent to limit it to the embodiment or embodiments disclosed herein. Further, although the description identifies or describes specifics of one or more embodiments, such specifics are not necessarily part of every embodiment, nor are all various stated advantages necessarily associated with a single embodiment or all embodiments. On the contrary, the intent is to cover all alternatives, modifications and equivalents included within the spirit and scope of the disclosure as defined by the appended claims. Further, it should be appreciated in the context of the present disclosure that the claims are not necessarily limited to the particular embodiments set out in the description.

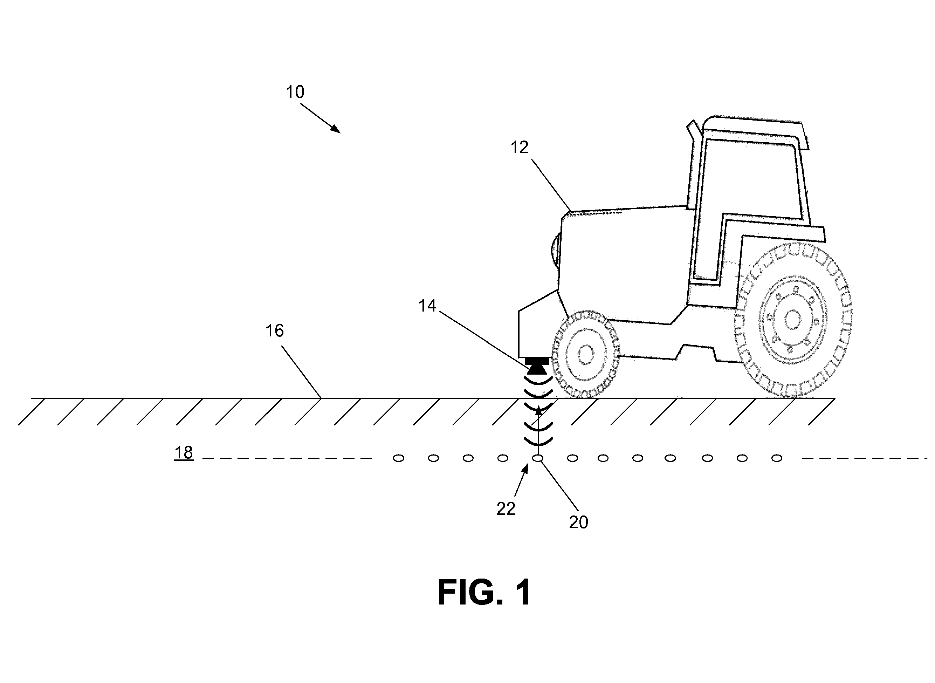

Referring now to FIG. 1, shown is an example environment 10 in which an embodiment of an example wireless seed monitoring system may be implemented. The example environment 10 comprises a vehicle 12 equipped with an interrogating device 14. The vehicle 12 is shown embodied as a tractor, though it should be appreciated by one having ordinary skill in the art that other vehicles (e.g., all-terrain vehicles (ATV), combine harvesters, pick-up trucks, jeeps, etc.) may be equipped with the interrogating device 14 and hence are contemplated to be within the scope of the disclosure. In one embodiment, the interrogating device 14 comprises a radio frequency identification (RFID) reader, though other interrogation devices may be used in some embodiments. The vehicle 12 traverses a field 16, beneath which comprises soil 18 that has embedded therein, at a predetermined depth, a plurality of seeds 20 for producing the next crop (e.g., soybean, corn, etc.). Wholly or partly coating (e.g., adhered to, or integrated with) each seed 20 is a sensing component 22. The sensing component 22 provides a mechanism by which conditions of the germinating seed 20 are monitored, with the conditions communicated to a computing device residing in the vehicle 12 and/or remotely. In one embodiment, the sensing component 22 comprises an RFID tag and one or more sensors.

In general, as the vehicle 12 traverses the field 16 (e.g., whether for the sole purpose of acquiring information about the seeds, or while performing other operations concurrently with the information acquisition), the interrogating device 14 transmits an electromagnetic signal. The electromagnetic signal may be a radio frequency (RF) signal with a wavelength suitable to penetrate the surface of the field 16 and reach the sensing component 22. The sensing component 22 receives the signal from the interrogating device 14, and responsively, sends a return electromagnetic signal back to the interrogating device 14, as schematically shown in FIG. 1 with the arrowhead emanating from the seed 20 and sensing component 22. The return signal may be a back scattered signal from the sensing component 22, with information about the sensed seed condition conveyed therein. In one embodiment, the sensing component 22 is a passive device (e.g., no internal battery source) that is excited or activated by the signal sent from the interrogating device 14. In some embodiments, an active (battery source to power electronics and transmission function) or semi-active (e.g., reliance on battery source and power from the interrogating device 14) sensing component 22 may be used. The information about the sensed seed condition may be communicated to a computing device in the vehicle 12, where it is presented (e.g., via a visual display) to the operator of the vehicle 12 and/or communicated (e.g., via radio or cellular modem) to a remote location for use in field and/or crop planning to optimize yields. For instance, seed conditions may be used to compare the effectiveness of different seed manufacturers for a given soil make-up, or to plan for intelligent field hydration or selective fertilization.

Note that, although shown coupled to a vehicle 12, the interrogating device 14 may be carried on a person walking the field 16, such as attached to a belt clip or held in the person's hand. The information acquired by the interrogating device 14 may be uploaded (e.g., via Bluetooth or USB port or other mechanisms well-known in the art) to a portable computing device, such as the person's smartphone, tablet. In some embodiments, functionality of the computing device and the interrogating device 14 may be combined in a single packaged unit (e.g., an application on a smartphone).

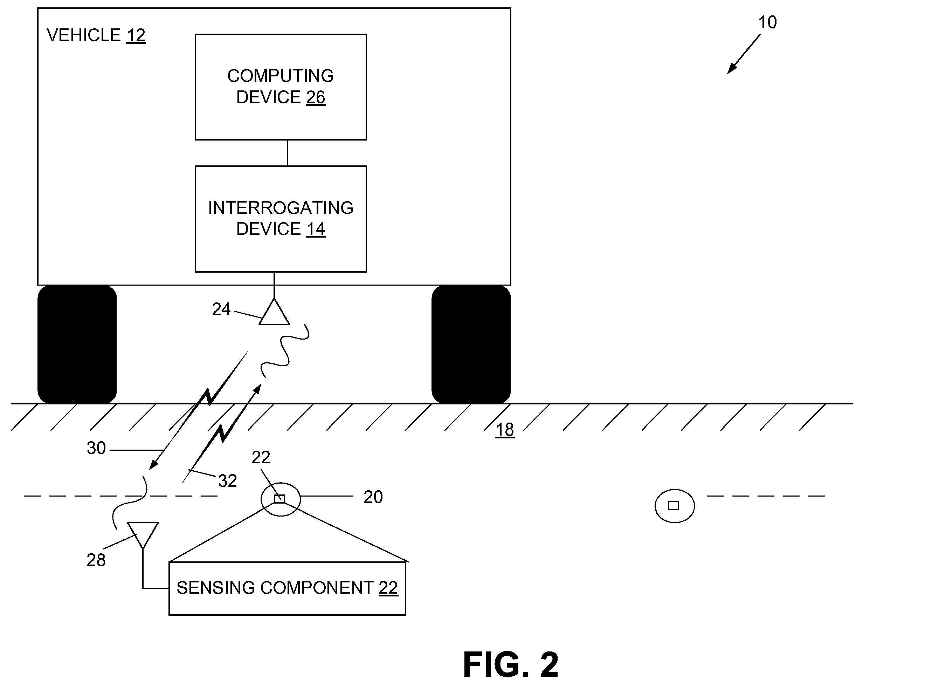

Referring now to FIG. 2, shown in schematic end view is the example environment 10 of FIG. 1, with additional detail regarding the wireless seed monitoring system. In one embodiment, the vehicle 12 comprises the interrogating device 14, which is equipped with an antenna 24 to radiate electromagnetic signals to the sensing component 22 and receive electromagnetic signals from the sensing component 22. The interrogating device 14 is also shown coupled to a computing device 26. In one embodiment, the interrogating device 14 is coupled to the computing device 26 over a CAN network, or other networks such as according to the ISO 11783 standard, also referred to as "Isobus." In some embodiments, the functionality of the computing device 26 and the interrogating device 14 are integrated into a single-packaged unit. As indicated above, the computing device 26 receives information about the detected seed condition and processes the same for farm planning and/or reporting. The sensing component 22 also comprises an antenna 28 coupled thereto. As explained previously, the sensing component 22 wholly or partially coats the seed disposed in the soil 18 and detects the condition of the seed (e.g., acidity, hydration, pressure imposed thereon), which causes a change in the electrical and/or magnetic characteristics or parameters of a sensor of the sensing component 22. The change in electrical and/or magnetic characteristics is communicated to a tag of the sensing component 22. Upon receiving an excitation signal 30 (e.g., having a first value corresponding to a characteristic or parameter, such as a first frequency, f1) via antenna 28, the sensing component 22 responds with a return signal 32 having a second value corresponding to a characteristic or parameter of the signal 32 (e.g., a second frequency f2 that is different than the first frequency f1). The return signal 32 is received by the antenna 24 and the information contained therein (e.g., in the form of a frequency coding or modulation of the return signal 32, or digital code or data contained therein in some embodiments) is communicated to the computing device 26 for further processing. In the example depicted in FIG. 2, the difference in frequency between the excitation signal 30 and the return signal 32 conveys the nature of the change in seed condition, though it should be appreciated by one having ordinary skill in the art in the context of the present disclosure that other mechanisms of conveying the condition of the seed 20 may be used, such as via differences in amplitude of the return signal 32, digital code, sound level (e.g., acoustic signals), etc.

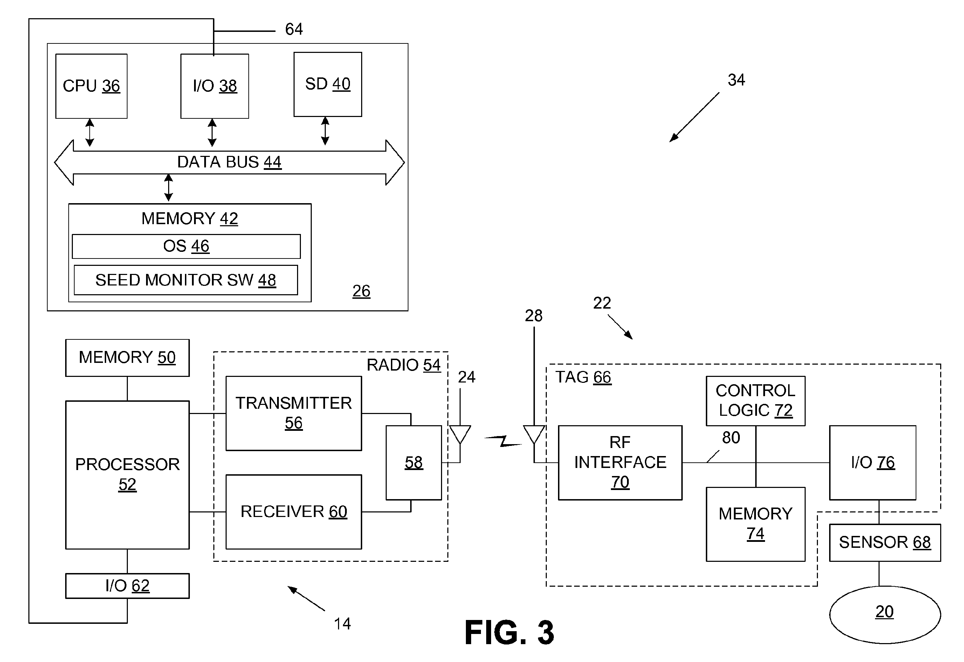

Attention is now directed to FIG. 3, which shows an embodiment of an example wireless seed monitoring system 34. It should be appreciated that the wireless seed monitoring system 34 depicted in FIG. 3 is merely illustrative of one embodiment, and that in some embodiments, fewer, additional, or different components may be used. In the example depicted in FIG. 3, the wireless seed monitoring system 34 comprises the computing device 26 coupled to the interrogating device 14, the latter wirelessly coupled to the sensing component 22. Beginning with the computing device 26, the computing device 26 is depicted in this example as a computer system, but may be embodied as a programmable logic controller (PLC), field programmable gate array (FPGA), application specific integrated circuit (ASIC), among other devices. It should be appreciated that certain well-known components of computer systems are omitted here to avoid obfuscating relevant features of the computing device 26. In one embodiment, the computing device 26 comprises one or more processors (also referred to herein as processor units or processing units or central processing unit (CPU)), such as processor 36, input/output (I/O) interface(s) 38, a storage device 40 (e.g., persistent storage, such as an optical, magnetic, or semiconductor structure), and memory 42, all coupled to one or more data busses, such as data bus 44. The memory 42 may include any one or a combination of volatile memory elements (e.g., random-access memory RAM, such as DRAM, and SRAM, etc.) and nonvolatile memory elements (e.g., ROM, hard drive, tape, CDROM, etc.). The memory 42 may store a native operating system, one or more native applications, emulation systems, or emulated applications for any of a variety of operating systems and/or emulated hardware platforms, emulated operating systems, etc.

In some embodiments, the memory 42 may store geographical information, such as one or more field maps (e.g., geographical coordinates of the entire field or field boundaries) and geographical coordinates of roads that access the fields. The geographical information may include topographic feature of the fields or roads in some embodiments. The field maps may be in the form of aerial imagery or recorded geographical coordinates of one or more fields, including recorded entry points, identified boundaries of the one or more fields, paths or waylines as previously determined, customizations, and/or other data pertinent to auto-farming implementations where applicable. In the embodiment depicted in FIG. 3, the memory 42 comprises an operating system (OS) 46 and seed monitor software (SW) 48. In some embodiments, additional software may be included in memory 42 and/or the storage device 40, such as machine control software and/or guidance software. For instance, the guidance software may be used in cooperation with a global navigation satellite signal (GNSS) receiver to monitor where in the field 16 (FIG. 1) that is traversed by the vehicle 12 (FIG. 1) the monitored seeds are located to facilitate optimization or in general farm planning based on different regions of the same or different fields. It should be appreciated that in some embodiments, additional or fewer software modules (e.g., combined functionality) may be deployed in the memory 42 or additional memory.

The seed monitor software 48 receives information about the condition of the monitored seeds and translates the data (e.g., frequency, amplitude, digital code) to user-readable format (e.g., pH, moisture content, pressure). The translation may be implemented by way of a look-up table (LUT) stored in memory 42, the storage device 40, or via access to a remote data structure, or in some embodiments, according to algorithmic translations. The seed monitor software 48 may comprise a graphics user interface (GUI) component that enables the display of the seed conditions on a display screen coupled to the computing device 26. The computing device 26 may also comprise radio or cellular modem functionality that enables the communication of the seed conditions to a remote device of a computing system for more centralized monitoring or sharing of information.

Execution of the software module 48, among other software, may be implemented by the processor 36 under the management and/or control of the operating system 46. The processor 36 may be embodied as a custom-made or commercially available processor, a central processing unit (CPU) or an auxiliary processor among several processors, a semiconductor based microprocessor (in the form of a microchip), a macroprocessor, one or more application specific integrated circuits (ASICs), a plurality of suitably configured digital logic gates, and/or other well-known electrical configurations comprising discrete elements both individually and in various combinations to coordinate the overall operation of the computing device 26.

The I/O interfaces 38 provide one or more interfaces to a network, such as the vehicle CAN network, a cellular network, among other networks. In other words, the I/O interfaces 38 may comprise any number of interfaces for the input and output of signals (e.g., analog or digital data) for conveyance of information (e.g., data) over one or more networks. The input may comprise input by an operator (local or remote) through a user interface and input from signals carrying information from one or more of the components of the wireless seed monitoring system 34, such as the seed condition information provided from the interrogating device 14 as explained further below.

When certain embodiments of the computing device 26 are implemented at least in part with software (including firmware), as depicted in FIG. 3, it should be noted that the software can be stored on a variety of non-transitory computer-readable medium for use by, or in connection with, a variety of computer-related systems or methods. In the context of this document, a computer-readable medium may comprise an electronic, magnetic, optical, or other physical device or apparatus that may contain or store a computer program (e.g., executable code or instructions) for use by or in connection with a computer-related system or method. The software may be embedded in a variety of computer-readable mediums for use by, or in connection with, an instruction execution system, apparatus, or device, such as a computer-based system, processor-containing system, or other system that can fetch the instructions from the instruction execution system, apparatus, or device and execute the instructions.

When certain embodiments of the computing device 26 are implemented at least in part with hardware, such functionality may be implemented with any or a combination of the following technologies, which are all well-known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

Turning now to the interrogating device 14, the interrogating device 14 is embodied as a well-known RFID reader. It should be appreciated by one having ordinary skill in the art that additional components or different components may be used to perform similar functionality, and hence are omitted here for brevity. The example interrogating device 14 comprises a processor 52 coupled to memory 50, and further coupled to a radio 54. The processor 52 receives and processes information about the seed conditions received from the sensing component 22. The memory 50 comprises instructions that are executed by the processor 52 to cause the processor to receive, write, and/or generally process the data received from the sensing component 22. The processor 52 and memory 50 may be of the same or similar type and/or structure to that described for processor 36 and memory 42, respectively, and hence description of the same is omitted here for brevity. Under control of the processor 52, the radio 54 provides for RF communications to/from the sensing component 22. For instance, the radio 54 comprises a transmitter 56 that is coupled to a switch or directional coupler 58 (hereinafter, "coupler"), the coupler enabling isolated, bi-directional (and concurrent) communications. The transmitter 56 comprises circuitry that includes a local oscillator that generates an RF carrier frequency that is used to modulate the transmission signal that is sent via the coupler 58 and the antenna 24 to the sensing component 22. Signals radiated back from the sensing component 22 are received at the antenna 24, routed by the coupler 58 to a receiver 60 in the radio 54. As is known, the receiver 60 comprises circuitry that processes (e.g., demodulates, filters, down-converts, etc.) the received signal to provide a baseband information signal to be further processed by the processor 52. The processor 52, in turn, conveys the information via an I/O port 62 to the I/O interfaces 38 of the computing device 26 via communications medium 64. The communications medium 64 may be a wired connection, or in some embodiments, a wireless connection (e.g., via near field communications or NFC or otherwise).

With regard to the sensing component 22, in one embodiment, the sensing component 22 comprises an RFID tag 66 and a sensor 68. The RFID tag 66 (hereinafter, "tag") comprises circuitry that is well-known in the art, including an RF interface 70, control logic 72, memory 74, and an I/O port 76. The RF interface 70 is coupled to the antenna 28, and may include circuitry such as an RF receiver that recovers signals (e.g., analog) that are transmitted by the interrogating device 14. The RF interface 70 further comprises circuitry such as an impedance matching circuit (e.g., comprising one or more of an inductor(s), capacitor(s), and/or resistor(s)), an RF transmitter that sends signals back to the interrogating device 14, and a modulator configured to backscatter modulate the impedance match with the antenna 28 to transmit data signals by reflecting a continuous wave (CW) signal provided by the interrogating device 14. The control logic 72 controls the functions of the tag 66 in response to commands provided by the interrogating device 14 that are embedded in the recovered RF signals. The control logic 72 accesses the memory 74 to read and/or write data therefrom. The control logic 72 also converts analog signals recovered by the RF interface 70 into digital signals comprising the received commands, and converts digital data (e.g., codes) retrieved from the memory 74 into analog signals that are backscatter modulated by the RF interface 70. In a passive embodiment, the tag 66 is configured to derive electrical power from the interrogating signal provided by the interrogating device 14.

The sensing component 22 further comprises a sensor 68 that communicates information in the form of changed electrical and/or magnetic characteristics of the sensor 68 via the I/O port of the tag 66, which in turn provides the information to the memory 74 for use in providing the signal from the tag 66 to the interrogating device 14. In one embodiment, the sensor 68 comprises a microelectromechanical systems (MEMS) device (e.g., a capacitor, conductive line such as carbon ink, etc.). For instance, a change in condition (e.g. change in pressure, acidity, moisture, etc.) of the wholly or partly coated seed 20 may cause a change in structure (e.g., a change in gap or conductivity) of the sensor 68, which may change the capacitance, inductance, and/or resistance of the sensor 68 and hence change the electrical and/or magnetic characteristics or parameters of the sensor 68. For instance, a change in capacitance may, when considered in cooperation with the impedance matching circuit of the tag 66, cause a change in the resonance frequency of the returned signal from the tag 66 to the interrogating device 14. This information (e.g., sensed conditions as represented by the changed electrical and/or magnetic characteristics) is communicated via the I/O port 76 to memory 74, which is used to format the signal (e.g., change the frequency, embedded coding changes, amplitude changes, etc.) sent from the tag 66. In some embodiments, the sensor 68 may be embodied as a nanomembrane, nanotube, and/or nanocantilever assembly, with such structures and corresponding attributes known to those having ordinary skill in the art. For instance, a change in structure in a flexible nanomembrane coupled to a substrate may likewise trigger a change in electrical and/or magnetic characteristics of the sensor 68, resulting in the communication of the corresponding information to the tag 66. The sensor 68 is embodied as a coating of all or a portion of the seed 20. The coating may have elements embedded therein (e.g., metallic elements) that change their respective electrical and/or magnetic characteristics, which in turn are communicated to the tag 66. As another example, a coating may make a husk permeable and serves as a membrane that enables selective chemicals to flow from the seed, causing a change in the coating resistance. In some embodiments, there may be multiple sensors 68 per seed 20, and in some embodiments, only a portion of the seeds 20 (e.g., representing a given area) are coupled to a respective sensor 68.

It is noted that the sensing component 22 may be embodied as a coating that is sprayed onto a seed, or alternatively, of a structure that is small enough in size to be coated (e.g., adhered, such as via an adhesive) to the seed 20. For instance, it is well-known that RFID tag structures have been constructed in powered form that measure 0.05 mm x 0.05 mm, and sensors today are available in the micrometer and nanometer range of measurement.

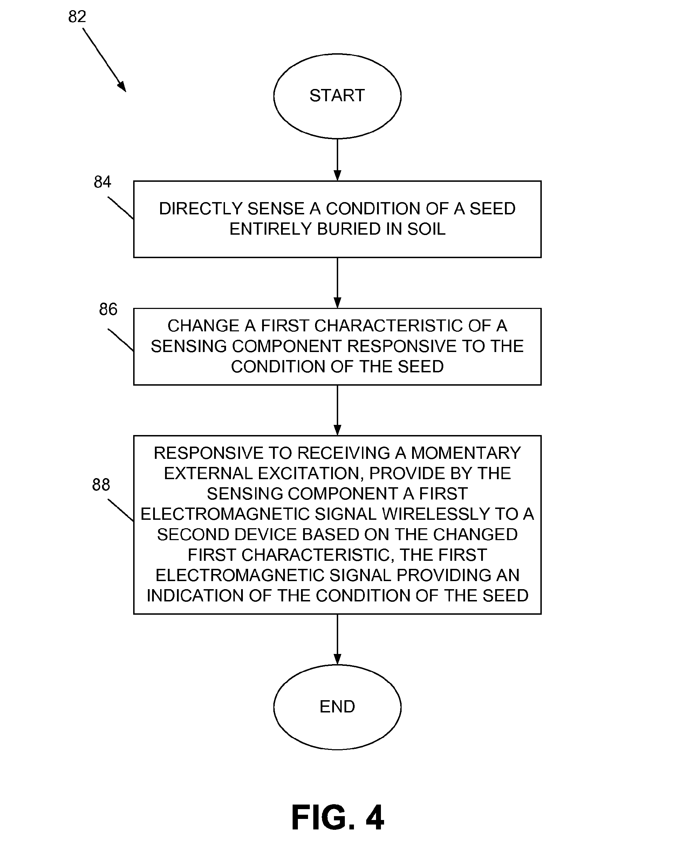

In view of the above description, it should be appreciated that one embodiment of a method 82, depicted in FIG. 4, comprises directly sensing a condition of a seed entirely buried in soil (84); changing a first characteristic of a sensing component responsive to the condition of the seed (86); and responsive to receiving a momentary external excitation, providing by the sensing component a first electromagnetic signal wirelessly to a second device based on the changed first characteristic, the first electromagnetic signal providing an indication of the condition of the seed (88).

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It should be emphasized that the above-described embodiments of the present disclosure are merely possible examples of implementations, merely set forth for a clear understanding of the principles of the disclosure. Many variations and modifications may be made to the above-described embodiment(s) of the disclosure without departing substantially from the spirit and principles of the disclosure. All such modifications and variations are intended to be included herein within the scope of this disclosure and protected by the following claims.

## Claims

1. A system, comprising:
a seed (20) disposed in, and surrounded by, soil (18);
a sensing component (22) in contact with the seed; and
a mobile interrogating device (14) that is configured to send a first electromagnetic signal (30) to the sensing component (22) while the device is in motion, the device further configured to receive a second electromagnetic signal (32) from the sensing component (22) with information corresponding to a condition corresponding to the seed (20), the second electromagnetic signal (32) responsive to the first electromagnetic signal (30),
**characterized in that** the sensing component (22) coats all or a portion of the seed (20).

2. The system of claim 1, wherein the information comprises an indication of hydration of the seed.

3. The system of claim 1, wherein the information comprises an indication of a temperature of the seed.

4. The system of claim 1, wherein the information comprises an indication of a pH of the seed.

5. The system of claim 1, wherein the information comprises an indication of a pressure the seed is subjected to.

6. The system of claim 1, wherein the sensing component (22) comprises a radio frequency identification (RFID) tag (66) and a sensor (68) operatively coupled to the tag, the tag comprising an antenna (28) and memory (74).

7. The system of claim 6, wherein the sensor (68) comprises a structure with a first signal parameter that changes based on a change in the condition sensed by the sensor, the antenna (28) providing the second electromagnetic signal (32) with a changed second signal parameter responsive to the change in the first signal parameter and the first electromagnetic signal (30).

8. The system of claim 6, wherein the sensor (68) comprises a nanomembrane or nanotube type structure.

9. The system of claim 6, wherein the sensor (68) comprises a microelectromechanical systems (MEMs)-type structure.

10. The system of claim 6, wherein the sensing component (22) comprises a circuit comprising one or any combination of a resistor, a capacitor, or an inductor.

11. The system of claim 1, wherein the mobile interrogating device (14) comprises a radio frequency identification (RFID) reader.

12. The system of claim 1, further comprising a computing device (36) configured to present to an operator a visualization of the condition of the seed based on the information.

13. The system of claim 1, further comprising a vehicle (12), the vehicle equipped with the interrogating device (14).

## Patentansprüche

1. System, mit:
einem in Erde (18) enthaltenen und von dieser umgebenen Samen (20);
einer mit dem Samen in Kontakt befindlichen Sensorkomponente (22); und
einer mobilen Abfragevorrichtung (14), die konfiguriert ist, um ein erstes elektromagnetisches Signal (30) an die Sensorkomponente (22) zu senden, während sich die Vorrichtung bewegt, wobei die Vorrichtung weiterhin zum Empfangen eines zweiten elektromagnetischen Signals (32) von der Sensorkomponente (22) konfiguriert ist, das einem Zustand des Samens (20) entsprechende Informationen enthält, wobei das zweite elektromagnetische Signal (32) abhängig von dem ersten elektromagnetischen Signal (30) ist, **dadurch gekennzeichnet, dass**
die Sensorkomponente (22) den gesamten Samen (20) oder einen Teil davon überzieht.

2. System nach Anspruch 1, wobei die Informationen eine Angabe der Hydration des Samens aufweisen.

3. System nach Anspruch 1, wobei die Informationen eine Angabe einer Temperatur des Samens aufweisen.

4. System nach Anspruch 1, wobei die Informationen eine Angabe eines pH-Werts des Samens aufweisen.

5. System nach Anspruch 1, wobei die Informationen eine Angabe des auf den Samen wirkenden Drucks aufweisen.

6. System nach Anspruch 1, wobei die Sensorkomponente (22) einen RFID-Transponder (66) und einen wirkungsmäßig mit dem Transponder verbundenen Sensor (68) aufweist, wobei der Transponder eine Antenne (18) und Speicher (74) aufweist.

7. System nach Anspruch 6, wobei der Sensor (68) eine Struktur mit einem ersten Signalparameter aufweist, der sich basierend auf einer Änderung des durch den Sensor gemessenen Zustands verändert, wobei die Antenne (28) das zweite elektromagnetische Signal (2) mit einem geänderten zweiten Signalparameter bereitstellt, der von der Änderung des ersten Signalparameters und dem ersten elektromagnetischen Signal (30) abhängt.

8. System nach Anspruch 6, wobei der Sensor (68) eine Nanomembranstruktur oder eine Nanoröhrentypstruktur aufweist.

9. System nach Anspruch 6, wobei der Sensor (68) eine mikroelektromechanische Systemtypstruktur (MEMs-Struktur) aufweist.

10. System nach Anspruch 6, wobei die Sensorkomponente (22) einen Schaltkreis mit einem Widerstand, einer Kapazität und/oder einem Induktor aufweist.

11. System nach Anspruch 1, wobei die mobile Abfragevorrichtung (14) ein RFID-Lesegerät aufweist.

12. System nach Anspruch 1, weiterhin mit einer Rechenvorrichtung (36), die zum Bereitstellen einer Visualisierung des Zustands des Samens basierend auf den Informationen für einen Benutzer konfiguriert ist.

13. System nach Anspruch 1, weiterhin mit einem Fahrzeug (12), wobei das Fahrzeug mit der Abfragevorrichtung (14) ausgestattet ist.

## Revendications

1. Dispositif, comprenant :
une graine (20) placée dans un sol (18) et entourée par celui-ci;
un composant de détection (22) en contact avec la graine ; et
un dispositif d'interrogation mobile (14) qui est configuré de manière à envoyer un premier signal électromagnétique (30) au composant de détection (22) alors que le dispositif est en mouvement, le dispositif étant en outre configuré de manière à recevoir un second signal électromagnétique (32) à partir du composant de détection (22) avec des informations correspondant à un état correspondant à la graine (20), le second signal électromagnétique (32) étant fonction du premier signal électromagnétique (30),
**caractérisé en ce que** le composant de détection (22) enrobe la totalité ou une partie de la graine (20).

2. Dispositif selon la revendication 1, dans lequel les informations comprennent une indication de l'hydratation de la graine.

3. Dispositif selon la revendication 1, dans lequel les informations comprennent une indication d'une température de la graine.

4. Dispositif selon la revendication 1, dans lequel les informations comprennent une indication d'un pH de la graine.

5. Dispositif selon la revendication 1, dans lequel les informations comprennent une indication d'une pression à laquelle la graine est soumise.

6. Dispositif selon la revendication 1, dans lequel le composant de détection (22) comprend une étiquette d'identification par radiofréquence (RFID) (66) et un capteur (68) couplé de manière opérationnelle à l'étiquette, l'étiquette comprenant une antenne (28) et une mémoire (74).

7. Dispositif selon la revendication 6, dans lequel le capteur (68) comprend une structure avec un premier paramètre de signal qui est modifié sur la base d'un changement de l'état détecté par le capteur, l'antenne (28) produisant le second signal électromagnétique (32) avec un second paramètre de signal modifié en fonction de la modification sur le premier paramètre de signal et le premier signal électromagnétique (30).

8. Dispositif selon la revendication 6, dans lequel le capteur (68) comprend une structure du type nano-membrane ou nanotube.

9. Dispositif selon la revendication 6, dans lequel le capteur (68) comprend une structure du type dispositif micro-électromécanique (MEM).

10. Dispositif selon la revendication 6, dans lequel le composant de détection (22) comprend un circuit comprenant un ou une combinaison quelconque parmi une résistance, un condensateur ou une inductance.

11. Dispositif selon la revendication 1, dans lequel le dispositif d'interrogation mobile (14) comprend un lecteur d'identification par radio fréquence (RFID).

12. Dispositif selon la revendication 1, comprenant en outre un dispositif de traitement (36) configuré de manière à présenter à un opérateur une visualisation de l'état de la graine sur la base des informations.

13. Dispositif selon la revendication 1, comprenant en outre un véhicule (12), le véhicule étant équipé du dispositif d'interrogation (14).
